# FASCICULE DE BREVET EUROPEEN

(11) **EP 2 243 892 B1**
(45) Date de publication et mention de la délivrance du brevet: **09.05.2012**
(21) Numéro de dépôt: 10157074.5
(22) Date de dépôt: 19.03.2010
(51) Int. Cl.: E04D 3/32, E04D 3/362, F24J 2/52, H01L 31/048, E04D 13/18, H01L 31/042, E04D 3/361

(54) **Support pour équipement photovoltaïque et dispositif d'integration pour équipement photovoltaïque comprenant un tel support**
Halterung für Photovoltaikanlage und Einrichtung für den Einbau einer Photovoltaikanlage mit einer solchen Halterung
Support for photovoltaic unit and device for the insertion of a photovoltaic unit comprising such a support

(30) Priorité: 03.04.2009 FR 0952205
(43) Date de publication de la demande: 27.10.2010
(73) Titulaire: Barsun, 87280 Limoge (FR)
(72) Inventeur: Thouin, Stéphane, 87280 Limoges (FR)
(74) Mandataire: Casalonga, Axel

(56) Documents cités:
- EP-A- 2 023 059
- DE-A1- 2 905 494
- DE-U1- 20 200 644
- DE-U1-202005 007 855
- DE-U1-202007 007 976
- FR-A- 2 772 808

## Description

La présente invention concerne le domaine des éléments de couverture de bâtiments permettant d'intégrer un équipement photovoltaïque à une toiture par exemple, et d'assurer l'étanchéité. En particulier, la présente invention concerne un support pour équipement photovoltaïque, et un dispositif d'intégration pour équipement photovoltaïque comprenant un tel support.

Différents dispositifs existent actuellement pour monter un équipement photovoltaïque, ou panneau solaire, sur une toiture. Cependant, la plupart de ces dispositifs viennent en superposition de la toiture, et ne remplacent donc pas celle-ci, c'est-à-dire ne sont pas intégrés à la toiture. On entend ici par « intégration » le fait que l'équipement photovoltaïque permette à la fois de produire de l'électricité et d'assurer une fonction technique ou architecturale. Il peut ainsi s'agir, dans le cas d'un équipement photovoltaïque installé sur la toiture d'un bâtiment, de remplacer des ardoises, tuiles ou encore une partie de la couverture de la toiture. L'équipement photovoltaïque doit donc, dans ce cas, remplir la fonction de la couverture, à savoir protéger de façon étanche et durable la structure du bâtiment contre les intempéries, résister aux agressions atmosphériques et au poids du personnel d'entretien.

Les dispositifs actuels d'intégration d'équipement photovoltaïque comprennent généralement un rail de fixation et une sous-couche plastique ou en tôle. Cependant, les sous-couches en plastique sont peu performantes pour assurer une fonction de couverture de toit. Par ailleurs, avec les sous-couches en tôle, on observe une condensation et une augmentation importante de la température entre la sous-couche et l'équipement photovoltaïque, ce qui diminue le rendement de ce dernier.

Un support selon le préambule de la revendication 1 est décrit dans le document EP 2 023 059 A.

Un but de l'invention est de fournir un support pour équipement photovoltaïque permettant de résoudre les inconvénients cités précédemment. En particulier, un but de l'invention est de proposer un support adapté à l'intégration de équipement photovoltaïque.

A cet effet, dans un mode de réalisation, il est proposé un support pour équipement photovoltaïque, de forme rectangulaire, comprenant une paroi inférieure d'appui, une paroi supérieure de fixation, sensiblement parallèle à la paroi inférieure et reliée à celle-ci par au moins deux parois centrales, verticales et longitudinales. Le support comprend également au moins une paroi sensiblement parallèle à la paroi supérieure et formant entretoise entre les deux parois centrales, et une protubérance longitudinale comportant une première partie s'étendant transversalement à partir d'une des extrémités de la paroi inférieure, et une deuxième partie s'étendant verticalement à partir de l'extrémité libre de la première partie.

Le support permet d'une part une fixation efficace de l'équipement photovoltaïque. En effet, l'équipement photovoltaïque pouvant être destiné à remplacer une toiture, c'est-à-dire à résister à des intempéries, la paroi de fixation et l'entretoise sont prévues pour augmenter la résistance à l'arrachement lorsque l'équipement photovoltaïque est fixé par exemple par vis sur le support. Par ailleurs, la présence d'une protubérance longitudinale permet également d'améliorer la fonction d'étanchéité du support puisqu'en cas de faible infiltration d'eau entre l'équipement photovoltaïque et le support, l'eau est acheminée vers la gouttière formée par la protubérance puis acheminée par celle-ci vers une conduite d'évacuation par exemple. Il est ainsi possible d'améliorer à la fois la résistance mécanique et la fonction d'étanchéité, sans augmenter le poids du support.

Préférentiellement, le support comprend également au moins une deuxième paroi sensiblement parallèle à la paroi supérieure et formant entretoise entre les deux parois centrales. L'utilisation de parois successives permet d'une part d'éviter d'augmenter le poids du support tout en conférant la résistance finale souhaitée.

Selon l'invention le support comprend également une paroi supérieure de soutien, disposée entre la protubérance longitudinale et la paroi supérieure de fixation, la paroi supérieure de soutien étant sensiblement parallèle à la paroi inférieure et reliée à celle-ci par au moins deux parois verticales et longitudinales.

La paroi de soutien peut être prévue et utilisée spécifiquement pour soutenir l'équipement photovoltaïque, notamment lorsque la paroi supérieure de fixation permet de fixer latéralement l'équipement photovoltaïque, et ne peut donc pas servir de soutien. Dans ce cas, l'équipement photovoltaïque est soutenu par la paroi supérieure de soutien et peut venir en butée contre la paroi centrale pour améliorer la fixation sur la paroi supérieure de fixation.

Une des parois verticales reliant la paroi supérieure de soutien à la paroi inférieure peut être formée par une paroi centrale. De plus, la paroi supérieure de soutien peut s'étendre de préférence transversalement dans le prolongement de la paroi supérieure de fixation. Une paroi verticale est commune à la paroi supérieure de fixation et à la paroi supérieure de soutien. Par ailleurs, ces deux parois peuvent être confondues pour former une seule et même surface comprenant plusieurs régions correspondant à des fonctions différentes.

Préférentiellement, le support comprend également une deuxième protubérance longitudinale comportant une première partie s'étendant transversalement à partir de l'extrémité libre de la paroi inférieure, et une deuxième partie s'étendant verticalement à partir de l'extrémité libre de la première partie.

La deuxième protubérance est utilisée notamment lorsque le support permet de fixer deux équipements photovoltaïques, disposés des deux cotés du support. Le support permet donc d'améliorer l'étanchéité au niveau de ces deux équipements.

Selon un mode de réalisation, le support comprend une deuxième paroi supérieure de soutien, disposée entre la deuxième protubérance longitudinale et la paroi supérieure de fixation, la deuxième paroi supérieure de soutien étant sensiblement parallèle à la paroi inférieure et reliée à celle-ci par au moins deux parois verticales et longitudinales.

Une des parois verticales reliant la deuxième paroi supérieure de soutien à la paroi inférieure peut être formée par une paroi centrale. De plus, la deuxième paroi supérieure de soutien peut s'étendre de préférence transversalement dans le prolongement de la paroi supérieure de fixation.

Préférentiellement, le support comprend également au moins une paroi sensiblement parallèle à la paroi supérieure et formant entretoise entre les parois verticales. Ladite paroi permet alors d'une part d'augmenter la rigidité du support, et également de définir deux espaces remplis d'air, ou trous, pouvant être utilisés postérieurement comme gaine pour câbles électriques par exemple.

La paroi formant entretoise entre les parois verticales peut s'étendre transversalement dans le prolongement d'une des parois formant entretoises entre les deux parois centrales. Le support comprend alors une seule et même paroi formant entretoise entre les différentes parois verticales du support.

Selon un autre aspect, il est proposé un dispositif d'intégration pour équipement photovoltaïque comprenant au moins deux supports selon le premier aspect de l'invention et une sous-couche d'isolation disposée entre les deux supports.

Préférentiellement, la sous-couche d'isolation comprend au moins un élément de couverture de bâtiment, de forme rectangulaire, comportant au moins une portion centrale et deux portions d'extrémité s'étendant sur toute la longueur dudit élément, entourant la portion centrale et pourvues de moyens d'accrochage sur la protubérance du support. La protubérance permet alors à la fois d'accrocher le support à un élément de couverture de la sous-couche, et d'assurer l'étanchéité du dispositif, notamment au niveau de la fixation du support à l'élément de couverture.

Préférentiellement, le moyen d'accrochage est apte à s'accrocher à un élément identique adjacent.

Préférentiellement, le moyen d'accrochage comprend une surface frontale longitudinale et une protubérance longitudinale s'étendant, à partir d'un des bords longitudinaux de la surface frontale, tout d'abord à l'opposé de la portion centrale, puis parallèlement à la surface frontale en direction de l'autre bord longitudinal de la surface frontale, pour définir une rainure longitudinale apte à recevoir la protubérance d'un élément identique adjacent ou d'un support, et formant dans un sens une gouttière. Deux éléments identiques peuvent ainsi être emboîtés l'un dans l'autre de façon étanche. L'eau s'écoulant le long de l'extrémité frontale de la protubérance dirigée vers le bas d'un premier élément tombe dans la gouttière formée par la protubérance dirigée vers le haut de l'élément associé ou du support et s'écoule dans cette gouttière sans entrer dans le bâtiment.

La rainure longitudinale peut être pourvue de bossages de retenue d'un élément identique adjacent, ce qui contribue à la tenue mécanique de l'ensemble des éléments associés entre eux et facilite le montage de ces éléments.

La paroi verticale définissant une gouttière avec la protubérance peut également comprendre un ergot formant butée dans le sens d'un mouvement montant. Un tel ergot permet d'utiliser un cavalier pour relier un support à un élément de couverture, lorsque la distance entre deux supports successifs n'est pas proportionnelle à la longueur des éléments de couverture.

L'invention sera mieux comprise à l'étude de la description détaillée de quelques modes de réalisation pris à titre d'exemples nullement limitatifs et illustrés par les dessins annexés, sur lesquels :
- la figure 1 est une vue de face d'un support selon un premier mode de réalisation de l'invention ;
- la figure 2 est une vue de face d'un support selon un deuxième mode de réalisation de l'invention ;
- la figure 3 est une vue de face d'un élément de couverture ;
- la figure 4 est une vue de face montrant une utilisation possible de l'élément de couverture de la figure 3, et
- La figure 5 est une vue de face montrant une autre utilisation possible de l'élément de couverture de la figure 3.

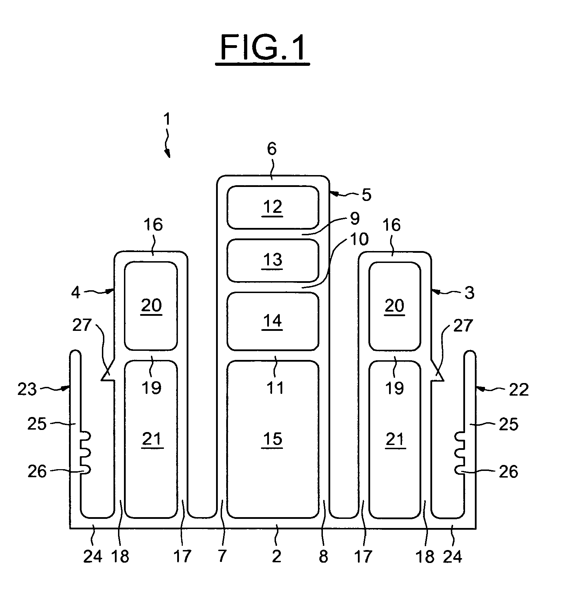

La figure 1 représente un premier mode de réalisation du support 1 pour équipement photovoltaïque, ou panneau solaire. Le support comprend une paroi inférieure 2 sur laquelle sont montées deux zones de soutien 3, 4 séparées par une zone de fixation 5. La paroi inférieure 2 permet notamment de fixer le support 1 sur la structure de toit, par exemple une charpente. Le support 1 est de forme rectangulaire, par exemple de longueur égale à 3, 6, 9 ou 12m, de largeur de 50 à 150mm et d'épaisseur de 50 à 150mm. On pourrait bien entendu prévoir des dimensions différentes, notamment des longueurs supérieures pour réaliser la couverture de bâtiments de grandes dimensions.

Le support 1 peut être réalisé par extrusion. Il peut être fabriqué en matériaux plastiques, en aluminium, en alliages extrudables, en composites fibres-plastiques, etc. Par ailleurs, afin de permettre l'utilisation du support comme gaine pour câble électrique, on utilisera de préférence un matériau isolant extrudable, tel que : le PVC, un composite PVC et bois, du polypropylène, du PET, du PBT ou un alliage de plastique isolant.

Par exemple, le matériau du support 1 peut être un mélange de matériau thermoplastique vierge ou recyclé et de fibres de bois, la teneur en fibres de bois étant inférieure à 20% en poids du poids total du mélange, tel qu'il est décrit dans la demande de brevet FR 2 851 595. Le matériau thermoplastique vierge ou recyclé peut être choisi parmi le polychlorure de vinyle (PVC), le polyéthylène chloré, l'ABS et l'acrylique. L'épaisseur des différentes parois du support pourra être choisie entre 2,5 et 3,5mm.

Comme on peut le voir sur la figure 1, la zone de fixation 5 comprend une paroi supérieure de fixation 6 sensiblement parallèle à la paroi inférieure 2 et reliée à celle-ci par deux parois centrales 7, 8 qui sont verticales et longitudinales. La paroi inférieure 2, la paroi supérieure de fixation 6 et les parois centrales définissent un creux formant un espace libre rempli d'air et s'étendant sur toute la longueur du support. Ce creux est partagé en plusieurs parties par des entretoises.

La zone de fixation comprend ainsi trois entretoises 9, 10 et 11. L'entretoise 9 est sensiblement parallèle à la surface supérieure de fixation 6 avec laquelle elle définit, avec une partie des parois centrales, un premier espace libre 12. L'entretoise 10 est sensiblement parallèle à l'entretoise 9 avec laquelle elle définit, avec une partie des parois centrales, un deuxième espace libre 13. Les entretoises 9, 10 et la surface supérieure de fixation 6 sont aptes à recevoir des clous ou des vis de fixation permettant de fixer l'équipement photovoltaïque au support. En particulier, la présence de trois parois successives permet d'augmenter de manière non-proportionnelle la résistance à l'arrachement de vis ou clous fixés à travers les parois. Par ailleurs, l'utilisation de parois successives permet également de réduire le poids du support, notamment par rapport à un support massif ne comprenant pas de premier et deuxième espaces libres.

L'entretoise 11 est sensiblement parallèle à l'entretoise 10 avec laquelle elle définit, avec une partie des parois centrales, un troisième espace libre 14. L'entretoise 11 définit également avec la surface inférieure 2 un quatrième espace libre 15 qui constitue, avec les premier, deuxième et troisième espaces libres 12, 13 et 14, le creux formé par la paroi inférieure 2, la paroi supérieure de fixation 6 et les parois centrales 7, 8.

L'entretoise 11 a pour fonction de rigidifier la zone de fixation 5. Par ailleurs, elle constitue une paroi supplémentaire permettant d'augmenter éventuellement la résistance à l'arrachement de vis ou clou, ou permettant de constituer une paroi de sécurité signalant la proximité de la paroi inférieure. Dans ce cas, l'entretoise 11 pourra être renforcée afin d'être difficilement traversée par un moyen de fixation susceptible de percer également la paroi inférieure 2 et donc de créer une fuite dans l'étanchéité du support 1.

Il reste possible de disposer, avec le support selon l'invention, un renfort dans les différents espaces libres afin d'augmenter la résistance à l'arrachement ou la tenue mécanique du support, lorsque celui-ci est destiné à être utilisé en conditions particulièrement exigeantes par exemple. Ainsi, il est possible de disposer un feuillard à l'intérieur des espaces libres 12, 13 ou 14 pour améliorer la résistance à l'arrachement de vis fixées dans le support 1, ou bien encore de prévoir une gaine supplémentaire, métallique par exemple, à l'intérieur de l'espace libre 14 ou 15 pour renforcer la tenue mécanique du support. Les espaces libres 12, 13, 14 et 15 peuvent ainsi être renforcés sans nécessiter de procédé de fabrication complexe.

La zone de fixation peut également servir de soutien pour l'équipement photovoltaïque. En effet, l'équipement photovoltaïque peut être disposé au-dessus du support 1. Dans ce cas, la zone de fixation vient en contact avec l'équipement photovoltaïque pour le soutenir, tandis que ce dernier est fixé au support 1 au niveau de ses deux extrémités par lesquelles dépasse le support 1, par l'intermédiaire de brides par exemple. Dans une telle disposition, des équipements photovoltaïques montés adjacents sur le support 1 sont séparés, dans le sens du support 1, par les brides fixées dans la zone de fixation 5.

Comme on peut le voir sur la figure 1, les zones de soutien 3, 4 étant symétriques, seule la zone de soutien 3 sera décrite. La zone de soutien 3 comprend une paroi supérieure de soutien 16 sensiblement parallèle à la paroi inférieure 2 et reliée à celle-ci par deux parois 17, 18 qui sont verticales et longitudinales. La paroi inférieure 2, la paroi supérieure de soutien 16 et les parois verticales 17, 18 définissent un creux formant un espace libre rempli d'air et s'étendant sur toute la longueur du support 1. Ce creux peut être partagé en plusieurs parties par une ou des entretoises.

En particulier, la zone de soutien 3 comprend une entretoise 19. L'entretoise 19 est sensiblement parallèle à la surface supérieure de soutien 16 avec laquelle elle définit, avec une partie des parois verticales, un premier espace libre 20. L'entretoise 19 définit également avec la surface inférieure 2, un deuxième espace libre 21 qui constitue, avec le premier espace libre 20, le creux formé par la paroi inférieure 2, la paroi supérieure de soutien 16 et les parois verticales 17, 18. L'entretoise 19 a pour fonction de rigidifier la zone de fixation 5. Par ailleurs, elle permet de séparer le creux en deux espaces libres 20, 21 qui peuvent alors être utilisés, par exemple, comme gaines pour câbles électriques.

La zone de soutien 3 peut présenter une hauteur inférieure à celle de la zone de fixation 5. En particulier, on pourra choisir une différence de hauteur entre la zone de soutien 3 et la zone de fixation 5 sensiblement égale à l'épaisseur d'un équipement photovoltaïque. La zone de soutien 3 peut être utilisée spécifiquement pour soutenir l'équipement photovoltaïque, notamment quand ce dernier est monté adjacent à la zone de fixation 5. Dans ce cas, l'équipement photovoltaïque peut venir en butée contre la paroi centrale 8 de la zone de fixation 5, et être fixé par une bride, par exemple, vissée ou clouée dans les parois 6, 9 et 10 de la zone de fixation. On comprend que l'équipement photovoltaïque est alors soutenu uniquement par la zone de soutien 3, et des équipements peuvent alors être montés adjacents dans le sens du support 1.

Cependant, il est également possible de prévoir une zone de soutien 3 présentant une hauteur supérieure à celle de la zone de fixation 5. La différence de hauteur peut être choisie par exemple de manière à être supérieure à la taille de têtes de vis utilisées, au niveau de la zone de fixation 5, pour fixer le support 1 à la structure de toit, par exemple la charpente. Dans ce cas, on garde une surface supérieure du support plane, apte à soutenir un équipement photovoltaïque, malgré la présence de vis de fixation à la charpente.

La zone de soutien 3 et la zone de fixation 5 peuvent être séparées, comme représenté sur la figure 1. Cependant, il est également possible d'avoir une zone de soutien 3 et une zone de fixation 5 adjacentes. Dans ce cas, la paroi centrale 8 et la paroi verticale 17 sont confondues.

Il est également possible de renforcer les espaces libres 20 et 21 par des parois ou gaines supplémentaires, par exemple métalliques, disposées à l'intérieur et capables d'augmenter la résistance mécanique de la zone de soutien 3 sans nécessiter de procédé de fabrication complexe.

Le support 1 comprend également deux protubérances 22 et 23. Comme on peut le voir sur la figure 1, les protubérances 22, 23 étant symétriques, seule la protubérance 22 sera décrite.

A partir de l'extrémité latérale de la paroi inférieure 2 s'étend la protubérance 22. La protubérance 22 comprend une première partie 24 s'étendant dans le prolongement de la paroi inférieure 2, à l'opposé de la zone de fixation 5, et une deuxième partie 25 s'étendant à partir de l'extrémité libre de la première partie 24 vers le haut et parallèlement à la paroi verticale 18, formant ainsi une rainure entre la paroi verticale 18, la première partie 24 et la deuxième partie 25 de la protubérance 22. La protubérance 22 s'étend sur toute la longueur du support. La deuxième partie 25 de la protubérance 22 s'étend sur une partie seulement de l'épaisseur du support 1, par exemple sur 35mm pour une épaisseur totale de 65mm de la zone de fixation 5 et du support 1. La deuxième partie 25 de la protubérance 22 comprend des bossages 26 faisant saillie dans la rainure en direction de la paroi verticale 18. Par ailleurs, le support comprend également un ergot 27 formant butée dans le sens d'un mouvement montant. L'ergot 27 est disposé sur les parois verticales 18, ou bien sur les parois centrales 7, 8 en absence de zone de soutien 3, 4 dans le support 1. L'ergot 27 permet notamment d'utiliser un cavalier de jonction comportant une lèvre souple coopérant avec l'ergot, afin de relier le support 1 avec un élément de couverture par exemple.

Comme on le comprendra, la zone de soutien 4 et la protubérance 23 seront prévues notamment lorsque le support 1 sera utilisé pour fixer deux équipements photovoltaïques différents (et séparés par la zone de fixation 5 du support 1). Cependant, il est également possible de n'avoir qu'une seule zone de soutien et une seule protubérance si le support n'est destiné à fixer qu'un équipement photovoltaïque.

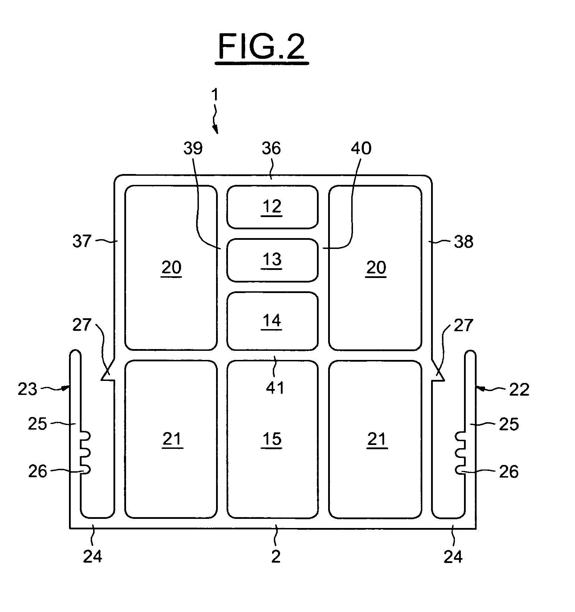

Sur la figure 2, on a représenté un deuxième mode de réalisation d'un support selon l'invention. Dans ce deuxième mode de réalisation, les éléments communs au premier mode sont désignés par la même référence.

Dans le deuxième mode de réalisation, les zones de fixation et de soutien sont adjacentes, et les parois supérieures de fixation et de soutien sont confondues pour former une surface supérieure 36. La paroi supérieure 36 est sensiblement parallèle à la surface inférieure 2, et reliée à celle-ci par deux parois verticales 37 et 38.

Par ailleurs, la paroi supérieure 36 est également reliée à la paroi inférieure 2 par deux parois centrales 39 et 40 qui sont sensiblement parallèles aux parois verticales 37 et 38 et positionnées entre elles. Une paroi 41 forme entretoise entre les parois 37, 38, 39 et 40.

Dans ce mode de réalisation, le support 1 peut être utilisé pour soutenir entièrement l'équipement photovoltaïque, et le fixer par ses extrémités latérales au support 1. On obtient alors un support de fixation aisé à utiliser.

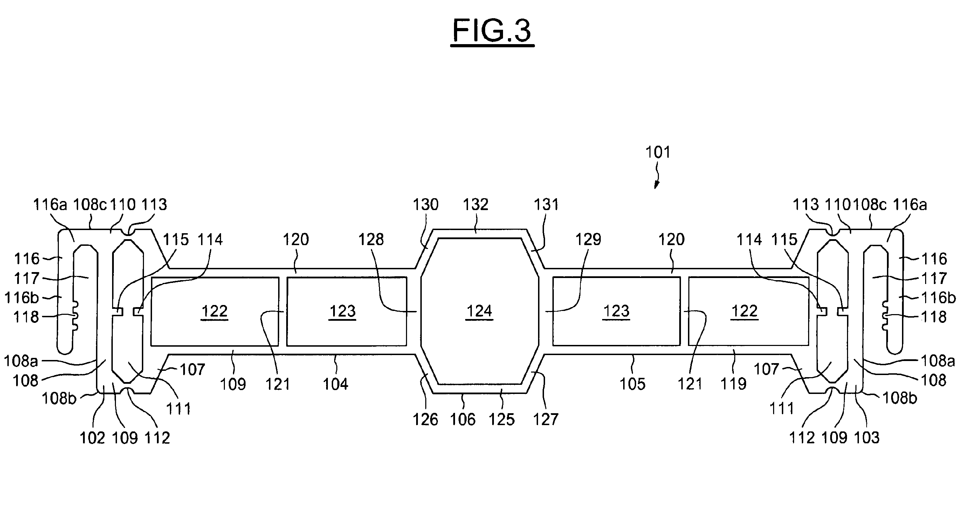

Comme on peut le voir sur les figures 3 à 4, un élément de couverture 101 comprend deux portions d'extrémité 102 et 103, deux portions centrales 104 et 105 et une portion de renfort 106 disposée entre les portions centrales 104 et 105. L'élément de couverture 101 est de forme rectangulaire plate, par exemple de longueur égale à 3, 6, 9 ou 12m, de largeur de 0,2 à 0,5m et d'épaisseur maximale de l'ordre de 45mm. On pourrait bien entendu prévoir des dimensions différentes, notamment des longueurs supérieures pour réaliser la couverture de bâtiments de grandes dimensions.

Toutefois, on souhaite qu'un élément de couverture 101 conserve des dimensions pratiques pour son transport par voie routière, sa manutention à la main et par chariot élévateur. On souhaite ainsi qu'un élément de couverture ne dépasse pas une masse de l'ordre de 25kg ce qui correspond environ à des dimensions de 12m x 0,25m, la masse surfacique d'un élément de couverture 101 étant de l'ordre de 8kg par m² ce qui est environ 50% plus léger que les tôles en fibrociment parfois utilisées et ce qui permet de réduire le coût de la charpente devant supporter ces éléments de couverture.

Comme on peut le voir sur la figure 3, les portions d'extrémité 102 et 103 étant symétriques, seule la portion d'extrémité 102 sera décrite. La portion d'extrémité 102 s'étend sur toute la longueur de l'élément de couverture 101 et comprend une première paroi frontale 107 adjacente à la portion centrale 104 et d'épaisseur supérieure à celle-ci, une seconde paroi frontale 108 sensiblement parallèle à la première paroi frontale 107 et reliée à celle-ci par une paroi inférieure 109 et une paroi supérieure 110. Les parois frontales 107 et 108, la paroi inférieure 109 et la paroi supérieure 110 définissent un creux formant un espace libre 111 rempli d'air et s'étendant sur toute la longueur de l'élément de couverture 101.

Les parois inférieure 109 et supérieure 110 sont chacune pourvues d'une zone de faible épaisseur 112 et 113 aptes à recevoir des clous ou des vis de fixation de l'élément de couverture 101 sur la charpente d'un bâtiment devant être recouvert. Pour faciliter encore la pose de clous ou de vis, deux nervures longitudinales 114 et 115 issues respectivement des parois frontales 107 et 108 et disposées à mi-hauteur font saillie dans l'espace libre 111, en regard l'une de l'autre pour former un moyen de guidage des clous ou des vis.

La deuxième paroi frontale 108 comprend une surface frontale longitudinale 108a qui se termine par un bord inférieur 108b et un bord supérieur 108c adjacent respectivement à la paroi inférieure 109 et à la paroi supérieure 110. Les parois inférieure 109 et supérieure 110 sont planes, parallèles entre elles et coplanaires avec les parois correspondantes de la portion d'extrémité 103 de façon à présenter des surfaces planes suffisantes de contact avec une charpente de support.

A partir du bord supérieure 108c de la surface frontale d'extrémité 108a de la paroi frontale 108 s'étend une protubérance 116. La protubérance 116 comprend une première partie 116a s'étendant dans le prolongement de la paroi supérieure 110 à l'opposé de la portion centrale 104 et une deuxième partie 116b s'étendant à partir de l'extrémité libre de la première partie 116a vers le bas et parallèlement à la surface frontale d'extrémité 108a, formant ainsi une rainure 117 entre la paroi frontale 108, la première partie 116a et la deuxième partie 116b de la protubérance 116. La protubérance 116 s'étend sur toute la longueur de l'élément de couverture. La deuxième partie 116b de la protubérance 116 s'étend sur une partie seulement de l'épaisseur de l'élément de couverture 101, par exemple sur 35mm pour une épaisseur totale de 45mm de la portion d'extrémité 102 et de l'élément de couverture 101. La deuxième partie 116b de la protubérance 116 comprend des bossages 118 faisant saillie dans la rainure 117 en direction de la paroi frontale 108.

Sur la figure 3, la rainure 117 est ouverte vers le bas. Toutefois, l'élément de couverture 101 pourrait être utilisé dans l'autre sens, la rainure 117 étant alors ouverte vers le haut et formant une gouttière ou un canal.

Les portions centrales 104 et 105 étant identiques, seule la portion 104 sera décrite. La portion 104 comprend une paroi inférieure 119, une paroi supérieure 120 espacée de la paroi inférieure 119 et une entretoise 121 reliant les parois inférieure 119 et supérieure 120. Les parois inférieure 119 et supérieure 120 sont parallèles, de faible épaisseur définissant entre elles un espace intérieur divisé par l'entretoise 121 et formant deux trous longitudinaux 122 et 123.

L'entretoise 121 est perpendiculaire aux parois inférieure 119 et supérieure 120, parallèle à la portion d'extrémité 102 et s'étend sur toute la longueur de l'élément de couverture 101. Le trou 122 est défini entre la première paroi frontale 107 de la portion d'extrémité 102, la paroi inférieure 119, la paroi supérieure 120 et l'entretoise 121 de la portion centrale 104. Le trou 123 est défini entre la paroi inférieure 119, la paroi supérieure 120, l'entretoise 121 de la portion centrale 104, et la portion de renfort 106. Les trous 122 et 123 sont remplis d'air ce qui assure une excellente isolation entre un côté et l'autre de l'élément de couverture 101.

La portion de renfort 106 est de forme octogonale creuse. Le creux formant un trou 124 s'étend sur toute la longueur de l'élément de couverture 101. La portion de renfort 106 comprend une paroi inférieure d'appui 125 coplanaire avec les parois inférieures 109 des portions d'extrémité 102 et 103 et permettant à la portion de renfort 106 de venir s'appuyer en son milieu sur une charpente de support. A partir de chaque bord de la paroi inférieure 125, s'étendent de façon symétrique deux parois de liaison 126 et 127 formant un angle d'environ 60° avec la paroi inférieure 125 et se raccordant avec les parois inférieures 119 des portions centrales 104 et 105.

A partir de l'intersection entre les portions de liaison 126 et 127 et les parois inférieures 119 des portions centrales 104 et 105, s'étendent deux parois verticales 128 et 129 rejoignant les parois supérieures 120 des portions centrales 104 et 105, parallèles aux entretoises 121 des portions centrales 104 et 105 et assurant également une fonction d'entretoisement. La partie supérieure de la portion de renfort 106 est formée par des parois de liaison 130 et 131 et une paroi supérieure 132 et est symétrique de la partie inférieure formée la paroi inférieure 125 et les parois de liaison 126 et 127 par rapport à l'axe central du trou 124.

L'élément de couverture 101 est de faible densité grâce à adjonction de sciure de bois dans le matériau thermoplastique recyclé et grâce à sa structure creuse. Il possède néanmoins d'excellentes qualités de rigidité grâce aux différentes parois verticales formant des entretoises et à la portion de renfort formant une nervure de rigidification.

On pourrait, à titre de variante, prévoir un élément de couverture 101 de plus grande largeur comprenant, deux, trois ou quatre portions de renfort 106 et trois, quatre ou cinq portions centrales correspondantes. On pourrait également concevoir un élément de couverture 101, dépourvu de portion de renfort, comprenant une unique portion centrale, notamment pour des applications où l'élément de couverture 101 est de très grande longueur.

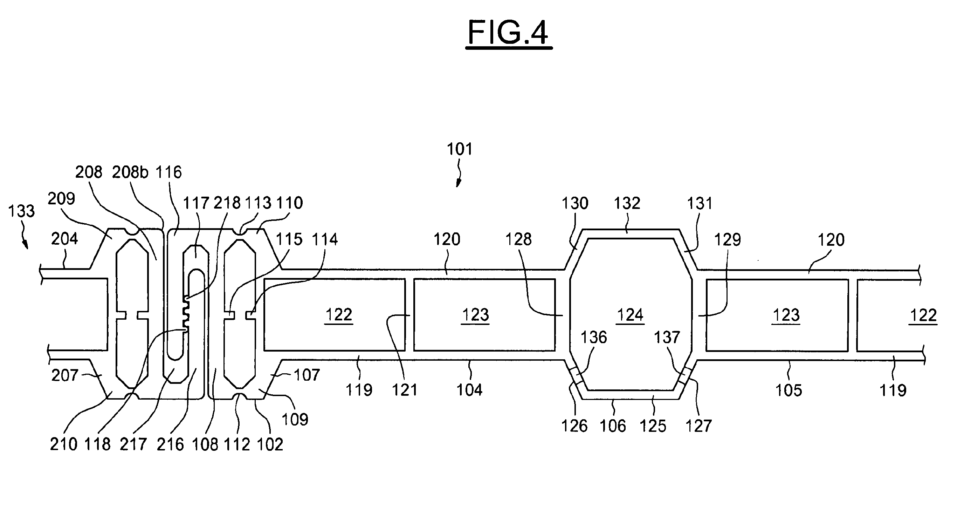

Sur la figure 4, on a représenté la coopération entre un premier élément de couverture 101 et un second élément de couverture 133 identique au premier élément de couverture 101. Les parties de l'élément de couverture 133 portent les références de l'élément de couverture 101 augmentées du nombre 100. L'élément de couverture 133 est disposé dans l'autre sens, sa protubérance 216 étant dirigée vers le haut et sa rainure 217 étant ouverte vers le haut. La protubérance 116 de la portion d'extrémité 102 de l'élément de couverture 101 vient en saillie dans la rainure 217 du second élément de couverture 133 et réciproquement.

D'éventuelles faibles quantités d'eau réussissant à s'introduire entre le bord 208b de la paroi frontale 208 du second élément de couverture 133 et la protubérance 116 du premier élément de couverture 101 seraient recueillies dans la rainure 217 formant gouttière du second élément de couverture 133 et s'écouleraient vers le bas en suivant la pente desdits éléments de couverture 101 et 133. Les bossages 118 et 218 présents sur la face interne des protubérances 116 et 216 des éléments de couverture 101 et 133 viennent coopérer les uns avec les autres ce qui empêche une éventuelle remontée d'eau entre les deux protubérances 116 et 216 et réduit ainsi un risque de pénétration de l'eau à l'intérieur du bâtiment. De plus, ces protubérances 118 et 218 garantissent un accrochage satisfaisant des deux éléments de couverture 101 et 133 ensemble et permettent le maintien d'un élément de couverture n'ayant pas encore reçu de moyens de fixation tels que des clous ou des vis lors du montage des éléments de couverture.

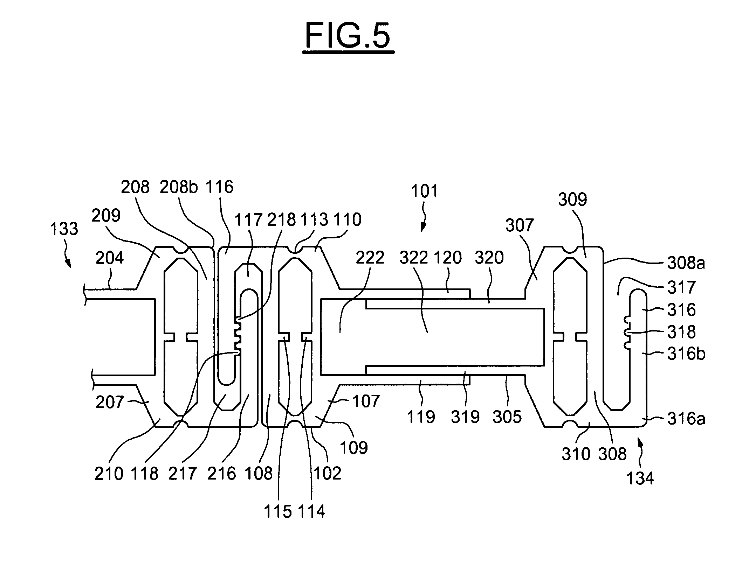

Comme on le remarque également sur la figure 4, la portion centrale 104 est d'épaisseur légèrement supérieure à celle de la portion centrale 105. L'épaisseur de la portion centrale 105 est sensiblement égale à la hauteur des trous 122 et 123 de la portion centrale 104 de façon à pouvoir venir coopérer ensemble comme illustré sur la figure 5.

En effet, l'élément de couverture 101 peut être facilement scié en longueur pour s'adapter à la largeur souhaitée par l'utilisateur au moyen d'une scie à main ou d'une scie électrique portative du genre utilisé pour le sciage de pièces de bois. Ainsi, l'élément de couverture 101 dont la portion d'extrémité 102 coopère toujours avec l'élément de couverture 133 a été coupé à proximité de l'entretoise 121 de la portion centrale 104 pour transformer le trou longitudinal 122 en une rainure ouverte qui est ainsi délimitée par la première paroi frontale 107 de la portion d'extrémité 102 et les portions subsistantes des parois inférieure 119 et supérieure 120 de la portion centrale 104.

Le troisième élément de couverture 134 dont les parties portent des références augmentées du nombre 200 peut être formé à partir de l'autre portion d'extrémité, non représentée sur la figure 4, de l'élément de couverture 101. L'élément de couverture 134 a été coupé à proximité de son entretoise 321 de sa portion centrale 305 de façon à transformer le trou longitudinal 322 en une rainure ouverte de façon identique à la coupure effectuée sur le premier élément de couverture 101. La portion centrale 305 de l'élément de couverture 134, d'épaisseur sensiblement égale au creux 122 de la portion centrale 104 de l'élément de couverture 101 vient s'emboîter dans ce creux 122, la paroi supérieure 320 venant en contact contre la paroi supérieure 120 et la paroi inférieure 319 venant en contact contre la paroi inférieure 119.

On dispose ainsi d'une planche à largeur variable permettant d'effectuer des ajustages précis.

A titre de variante, plutôt que d'emboîter deux éléments de couverture adjacents comme illustré sur la figure 4, on pourrait juxtaposer deux éléments de couverture dans le sens où ils se présentent sur la figure 3, leurs rainures 117 étant ouvertes vers le bas. On pourrait laisser une fente de l'ordre de 15mm de largeur pour assurer une ventilation efficace du bâtiment recouvert par les éléments de couverture ce qui présente un intérêt particulier pour les bâtiments agricoles abritant du bétail produisant des quantités importantes de vapeurs d'eau et d'ammoniac qu'il est souhaitable de pouvoir évacuer pour conserver une atmosphère saine à l'intérieur du bâtiment. Cette atmosphère saine permet, de plus, de réduire le nombre de micro-organismes indésirables présents dans le lait dans le cas d'un élevage de vaches laitières afin de satisfaire aux normes de qualité. Une telle fente de faible largeur est formée par des protubérances 116 dont la hauteur largement supérieure à la largeur de la fente limite fortement l'entrée de la pluie, en particulier dans le cas d'une pluie de travers en empêchant la chute directe de gouttes dans le bâtiment.

La présence de nombreux espaces creux longitudinaux et ouverts à leurs extrémités dans l'élément de couverture peut être mis à profit pour le passage de câbles électriques ou de tuyaux d'eau ou d'air comprimé ce qui permet de prévoir des passages de câbles et de tuyaux qui ne nécessitent pas de support spécifique, et qui sont complètement protégés contre les dégâts pouvant être causés par des animaux ou des machines évoluant à l'intérieur du bâtiment. Les portions de renfort 106 sont particulièrement adaptées aux passages de tuyaux d'eau en raison des dimensions régulières et importantes du trou 124. On pourrait néanmoins prévoir des portions de renfort de formes différentes, hexagonale, rectangulaire, arrondie à surfaces d'appui planes etc.

Grâce à l'invention on dispose d'un dispositif d'intégration isolant thermiquement et électriquement, facile à poser même par une main d'oeuvre peu qualifiée équipée d'outillage courant et pouvant être fabriqué à la demande en différentes longueurs, de faible masse surfacique et ne nécessitant pas de produit de traitement polluant. La fixation des éléments de couverture peut être effectuée par des dispositifs connus tels que clous, vis, étriers ou vis autoforeuses. La juxtaposition ou l'emboîtement des éléments de couverture est facile et un démontage partiel non destructif est envisageable. Le matériau dans lequel est réalisé l'élément de couverture résiste à un environnement agressif tel que la chaleur humide, les poussières, la vapeur d'ammoniac et de façon plus générale l'environnement régnant dans un bâtiment à usage agricole, tout en apportant un grand confort aux animaux présents dans le bâtiment grâce à ses qualités d'isolation y compris d'isolation phonique.

On pourra par ailleurs choisir comme matériau de l'élément de couverture, un isolant électrique, tel que le PVC, le PP, le PET, etc. L'élément de couverture en matériau isolant présente alors l'avantage de ne pas conduire à un risque de court-circuit, notamment lors de la pose d'un équipement photovoltaïque continuant de produire de l'électricité et donc susceptible d'électrocuter ou d'être dégradé lors d'un contact avec une couverture de toit conductrice.

Au cours de son vieillissement, l'élément de couverture ne libère pas de produit toxique. Par l'utilisation de matériaux recyclés et de déchets de bois, il permet de substantielles économies d'énergie tout en étant lui-même recyclable dans des filières de recyclage existantes.

Enfin, l'association de l'élément de couverture et du support permet d'intégrer facilement et de manière fiable des équipements photovoltaïques à un bâtiment, tout en gardant les propriétés spécifiques à chaque application (étanchéité, absence de condensation). De plus, il est également possible de prévoir une aération améliorée entre l'équipement photovoltaïque et l'élément de couverture. On peut notamment obtenir une épaisseur d'air déterminée, en choisissant la hauteur du support et de l'élément de couverture. Ainsi, en fonction des besoins de ventilation, on pourra prévoir une épaisseur de lame d'air de 70mm par exemple, afin de maintenir l'équipement photovoltaïque à une température modérée à laquelle il présente un rendement élevé.

## Revendications

1. Support (1) pour équipement photovoltaïque, de forme rectangulaire, comprenant une paroi inférieure d'appui (2), une paroi supérieure de fixation (6), sensiblement parallèle à la paroi inférieure (2) et reliée à celle-ci par au moins deux parois centrales (7, 8), verticales et longitudinales, le support comprenant également au moins une paroi (9) sensiblement parallèle à la paroi supérieure (6) et formant entretoise entre les deux parois centrales (7, 8), une protubérance longitudinale (22) comportant une première partie (24) s'étendant transversalement à partir d'une des extrémités de la paroi inférieure, et une deuxième partie (25) s'étendant verticalement à partir de l'extrémité libre de la première partie, **caractérisé en ce que** le support (1) comprend également une paroi supérieure de soutien (16), disposée entre la protubérance longitudinale (22) et la paroi supérieure de fixation (6), la paroi supérieure de soutien (16) étant sensiblement parallèle à la paroi inférieure (2) et reliée à celle-ci par au moins deux parois verticales et longitudinales (17, 18).

2. Support selon la revendication 1 comprenant également au moins une deuxième paroi (10) sensiblement parallèle à la paroi supérieure (6) et formant entretoise entre les deux parois centrales (7, 8).

3. Support selon la revendication 1 ou 2 dans lequel une des parois verticales reliant la paroi supérieure de soutien à la paroi inférieure est formée par une paroi centrale (40) et dans lequel la paroi supérieure de soutien s'étend de préférence transversalement dans le prolongement de la paroi supérieure de fixation.

4. Support selon l'une quelconque des revendications 1 à 3 comprenant également une deuxième protubérance longitudinale (23) comportant une première partie s'étendant transversalement à partir de l'extrémité libre de la paroi inférieure, et une deuxième partie s'étendant verticalement à partir de l'extrémité libre de la première partie.

5. Support selon la revendication 4 comprenant une deuxième paroi supérieure de soutien, disposée entre la deuxième protubérance longitudinale et la paroi supérieure de fixation, la deuxième paroi supérieure de soutien étant sensiblement parallèle à la paroi inférieure et reliée à celle-ci par au moins deux parois verticales et longitudinales.

6. Support selon la revendication 5 dans lequel une des parois verticales reliant la deuxième paroi supérieure de soutien à la paroi inférieure est formée par une paroi centrale (39) et dans lequel la deuxième paroi supérieure de soutien s'étend de préférence transversalement dans le prolongement de la paroi supérieure de fixation.

7. Support selon l'une quelconque des revendications 1 à 6 comprenant également au moins une paroi (19) sensiblement parallèle à la paroi supérieure et formant entretoise entre les parois verticales (17, 18).

8. Support selon la revendication 7 et l'une quelconque des revendications 3 ou 6, dans lequel la paroi formant entretoise entre les parois verticales (37, 39) s'étend transversalement dans le prolongement d'une des parois formant entretoises entre les deux parois centrales (39, 40).

9. Dispositif d'intégration pour équipement photovoltaïque comprenant au moins deux supports selon l'une quelconque des revendications 1 à 8 et une sous-couche d'isolation disposée entre les deux supports.

10. Dispositif selon la revendication 9 dans lequel la sous-couche d'isolation comprend au moins un élément de couverture de bâtiment (101), de forme rectangulaire, comportant au moins une portion centrale (104) et deux portions d'extrémité (102, 103) s'étendant sur toute la longueur dudit élément, entourant la portion centrale et pourvues de moyens d'accrochage sur la protubérance (22) du support (1).

11. Dispositif selon la revendication 10 dans lequel le moyen d'accrochage est apte à s'accrocher à un élément identique adjacent.

12. Dispositif selon la revendication 10 ou 11 dans lequel le moyen d'accrochage comprend une surface frontale (108a) longitudinale et une protubérance longitudinale (176) s'étendant, à partir d'un des bords longitudinaux de la surface frontale, tout d'abord à l'opposé de la portion centrale, puis parallèlement à la surface frontale en direction de l'autre bord longitudinal de la surface frontale, pour définir une rainure longitudinale (117) apte à recevoir la protubérance d'un élément identique adjacent ou d'un support, et formant dans un sens une gouttière.

## Claims

1. Support (1) for photovoltaic equipment, of rectangular shape, comprising a lower bearing wall (2), an upper fixing wall (6) substantially parallel to the lower wall (2) and connected thereto by at least two vertical and longitudinal central walls (7, 8), the support also comprising at least one wall (9) substantially parallel to the upper wall (6) and forming a spacer piece between the two central walls (7, 8), a longitudinal protrusion (22) comprising a first part (24) extending transversely from one of the ends of the lower wall, and a second part (25) extending vertically from the free end of the first part, **characterized in that** the support (1) also comprises an upper support wall (16), positioned between the longitudinal protrusion (22) and the upper fixing wall (6), the upper support wall (16) being substantially parallel to the lower wall (2) and connected thereto by at least two vertical and longitudinal walls (17, 18).

2. Support according to Claim 1, also comprising at least one second wall (10) substantially parallel to the upper wall (6) and forming a spacer piece between the two central walls (7, 8).

3. Support according to Claim 1 or 2 in which one of the vertical walls connecting the upper support wall to the lower wall is formed of a central wall (40) and in which the upper support wall preferably extends transversely in the continuation of the upper fixing wall.

4. Support according to any one of Claims 1 to 3 also comprising a second longitudinal protrusion (23) comprising a first part extending transversely from the free end of the lower wall and a second part extending vertically from the free end of the first part.

5. Support according to Claim 4 comprising a second upper support wall positioned between the second longitudinal protrusion and the upper fixing wall, the second upper support wall being substantially parallel to the lower wall and connected thereto by at least two vertical and longitudinal walls.

6. Support according to Claim 5 in which one of the vertical walls connecting the second upper support wall to the lower wall is formed of a central wall (39) and in which the second upper support wall preferably extends transversely in the continuation of the upper fixing wall.

7. Support according to any one of Claims 1 to 6 also comprising at least one wall (19) substantially parallel to the upper wall and forming a spacer piece between the vertical walls (17, 18).

8. Support according to Claim 7 and either one of Claims 3 and 6, in which the wall forming a spacer piece between the vertical walls (37, 39) extends transversely in the continuation of one of the walls forming spacer pieces between the two central walls (39, 40).

9. Integration device for photovoltaic equipment comprising at least two supports according to any one of Claims 1 to 8 and an insulating sublayer positioned between the two supports.

10. Device according to Claim 9 in which the insulating sublayer comprises at least one building roofing element (101) of rectangular shape, comprising at least one central portion (104) and two end portions (102, 103) extending over the entire length of the said element, surrounding the central portion and which are provided with means of attachment to the protrusion (22) of the support (1).

11. Device according to Claim 10 in which the means of attachment is capable of attachment to an adjacent identical element.

12. Device according to Claim 10 or 11 in which the means of attachment comprises a longitudinal frontal surface (108a) and a longitudinal protrusion (116) extending, from one of the longitudinal edges of the frontal surface, first of all away from the central portion and then parallel to the frontal surface towards the other longitudinal edge of the frontal surface to define a longitudinal groove (117) capable of accepting the protrusion of an adjacent identical element or of a support, and in some sense forming a channel.

## Patentansprüche

1. Träger (1) für eine Photovoltaikanlage von rechteckiger Form, der eine untere Auflagewand (2) und eine obere Befestigungswand (6), im Wesentlichen parallel zur unteren Wand (2) und mit dieser durch mindestens zwei zentrale, senkrechte und längs verlaufende Wände (7, 8) verbunden enthält, wobei der Träger ebenfalls mindestens eine im Wesentlichen zur oberen Wand (6) parallele Wand (9), die einen Abstandshalter zwischen den zwei zentralen Wänden (7, 8) bildet, und einen Längsvorsprung (22) enthält, der einen ersten Teil (24), der sich quer ausgehend von einem der Enden der unteren Wand erstreckt, und einen zweiten Teil (25) aufweist, der sich senkrecht ausgehend vom freien Ende des ersten Bereichs erstreckt, **dadurch gekennzeichnet, dass** der Träger (1) ebenfalls eine obere Stützwand (16) enthält, die zwischen dem Längsvorsprung (22) und der oberen Befestigungswand (6) angeordnet ist, wobei die obere Stützwand (16) im Wesentlichen parallel zur unteren Wand (2) und mit dieser über mindestens zwei senkrechte und längs verlaufende Wände (17, 18) verbunden ist.

2. Träger nach Anspruch 1, der ebenfalls mindestens eine zweite Wand (10) im Wesentlichen parallel zur oberen Wand (6) aufweist, die einen Abstandshalter zwischen den zwei zentralen Wänden (7, 8) bildet.

3. Träger nach Anspruch 1 oder 2, bei dem eine der die obere Stützwand mit der unteren Wand verbindenden senkrechten Wände von einer zentralen Wand (40) gebildet wird, und bei dem die obere Stützwand sich vorzugsweise quer in der Verlängerung der oberen Befestigungswand erstreckt.

4. Träger nach einem der Ansprüche 1 bis 3, der ebenfalls einen zweiten Längsvorsprung (23) aufweist, der einen ersten Bereich, der sich ausgehend von dem freien Ende der unteren Wand quer erstreckt, und einen zweiten Bereich aufweist, der sich ausgehend vom freien Ende des ersten Bereichs senkrecht erstreckt.

5. Träger nach Anspruch 4, der eine zweite obere Stützwand enthält, die zwischen dem zweiten Längsvorsprung und der oberen Befestigungswand angeordnet ist, wobei die zweite obere Stützwand im Wesentlichen parallel zur unteren Wand und mit dieser durch mindestens zwei senkrechte und längs verlaufende Wände verbunden ist.

6. Träger nach Anspruch 5, bei dem eine der senkrechten Wände, die die zweite obere Stützwand mit der unteren Wand verbinden, von einer zentralen Wand (39) gebildet wird, und bei dem die zweite obere Stützwand sich vorzugsweise quer in der Verlängerung der oberen Befestigungswand erstreckt.

7. Träger nach einem der Ansprüche 1 bis 6, der ebenfalls mindestens eine Wand (19) im Wesentlichen parallel zur oberen Wand enthält, die einen Abstandshalter zwischen den senkrechten Wänden (17, 18) bildet.

8. Träger nach Anspruch 7 und einem der Ansprüche 3 oder 6, bei dem die einen Abstandshalter zwischen den senkrechten Wänden (37, 39) bildende Wand sich quer in der Verlängerung einer der Wände erstreckt, die einen Abstandshalter zwischen den zwei senkrechten Wänden (39, 40) bilden.

9. Einbauvorrichtung für eine Photovoltaikanlage, die mindestens zwei Träger nach einem der Ansprüche 1 bis 8 und eine Isolationsunterschicht enthält, die zwischen den zwei Trägern angeordnet ist.

10. Vorrichtung nach Anspruch 9, bei der die Isolationsunterschicht mindestens ein Gebäudeabdeckungselement (101) von rechteckiger Form enthält, das mindestens einen zentralen Abschnitt (104) und zwei Endabschnitte (102, 103) aufweist, die sich über die ganze Länge des Elements erstrecken, den zentralen Abschnitt umgeben und mit Einhakeinrichtungen am Vorsprung (22) des Trägers (1) versehen sind.

11. Vorrichtung nach Anspruch 10, bei der die Einhakeinrichtung an einem gleichen benachbarten Element befestigt werden kann.

12. Vorrichtung nach Anspruch 10 oder 11, bei der die Einhakeinrichtung eine Längsstirnfläche (108a) und einen Längsvorsprung (116) enthält, der sich ausgehend von einem der Längsränder der Stirnfläche zunächst entgegengesetzt zum zentralen Abschnitt, dann parallel zur Stirnfläche in Richtung des anderen Längsrands der Stirnfläche erstreckt, um eine Längsrille (117) zu definieren, die den Vorsprung eines benachbarten gleichen Elements oder eines Trägers aufnehmen kann und in einer Richtung eine Rinne formt.
